Europäisches Patentamt

European Patent Office

Office européen des brevets

(19)

(11) Numéro de publication : **0 080 228 B1**

(12) **FASCICULE DE BREVET EUROPÉEN**

(45) Date de publication du fascicule du brevet :
21.01.87

(51) Int. Cl.⁴ : **G 02 C  5/12**

(21) Numéro de dépôt : **82201434.6**

(22) Date de dépôt : **12.11.82**

(54) Plaquette nasale en matière plastique souple pour montures de lunettes.

(30) Priorité : **24.11.81 FR 8122336**

(43) Date de publication de la demande :
**01.06.83 Bulletin 83/22**

(45) Mention de la délivrance du brevet :
**21.01.87 Bulletin 87/04**

(84) Etats contractants désignés :
**AT DE GB IT**

(56) Documents cités :
**DE-A- 2 616 432**
**DE-U- 7 932 968**
**FR-A-   586 289**
**FR-A- 1 092 851**
**FR-A- 1 167 045**
**FR-A- 2 398 321**

(73) Titulaire : **Etablissements Pierre FINASSE S.A.**
**22, rue de la République**
**F-39400 Morez (FR)**

(72) Inventeur : **Bussod, Michel**
**22, rue de la République**
**F-39400 Morez (FR)**

(74) Mandataire : **Silhol, Christian Maurice Alfred et al**
**c/o BUGNION S.A. Conseils en Propriété Industrielle**
**10, route de Florissant Case Postale 375**
**CH-1211 Genève 12 - Champel (CH)**

EP 0 080 228 B1

## Description

L'invention concerne les plaquettes nasales en matière plastique souple pour les montures de lunettes, fixées sur les cercles à drageoir par un support adéquat.

Dans ce domaine, il existe plusieurs types de plaquettes parmi lesquels on peut citer les plaquettes munies d'un dispositif à charnière en deux parties, l'une étant un support fixé sur le cercle à drageoir, l'autre étant une pièce complémentaire noyée partiellement dans le corps de la plaquette. L'appui sur le nez est ponctuel et la flexibilité de la plaquette n'est pas, dans ce cas, rationnellement utilisée.

Le document DE-U-79 32 968 décrit une plaquette caractérisée en ce que les supports métalliques formés d'une seule pièce sont inclinables au moyen de fixations par points sur les entourages des yeux et présentent deux tenons ronds sur lesquels sont montés, avec possibilité de pivotement et de remplacement rapide, les plaquettes souples et élastiques, pourvues d'un perçage approprié ; ces plaquettes sont dépourvues de garnitures métalliques ou d'appuis sur des pièces métalliques dans la zone importante qui sert d'appui sur l'arête du nez.

La flexibilité de la plaquette est mieux utilisée que dans le cas précédent mais son accrochage sur les tenons est aléatoire car, si une pression trop forte est exercée en son centre, les tenons risquent de sortir de leurs logements sur la plaquette.

Le but de l'invention consiste à réaliser une plaquette souple dont une extrémité au moins glisse librement sur une partie du support qui la relie au cercle à drageoir.

A cette fin, la présente invention concerne une plaquette nasale telle que définie à la revendication 1.

Les moyens d'articulation (A) sont constitués, d'une part, d'une partie en relief située à l'une des extrémités du corps de la plaquette, d'autre part, d'une des extrémités du support, ladite partie en relief et l'extrémité du support étant reliées par le pivot de l'articulation.

Les moyens de coulissement (B) coopérant avec les moyens d'articulation (A) sont constitués, d'une part, d'une partie en relief située à l'autre extrémité du corps de la plaquette, comportant une coulisse orientée dans le sens de la plus grande longueur (L), d'autre part, de l'autre extrémité du support comportant un coulisseau de forme correspondant à celle de la coulisse, de façon que la plaquette puisse se déformer entre l'articulation (A), point d'appui fixe, et le coulissement (B), point d'appui mobile.

Le principal avantage présenté par cette plaquette tient au fait que sa mise en place sur le support s'obtient en enfilant le coulisseau du support dans la coulisse de la plaquette puis en jumelant les deux parties de l'articulation, celle du support et celle de la plaquette. Toute l'élasticité de la plaquette est ainsi disponible pour épouser, dans les meilleures conditions, la forme du nez de l'utilisateur des lunettes, sans risque de voir la plaquette s'arracher de son support.

D'autres avantages ressortiront de la description de formes d'exécutions préférentielles mais non limitatives et du dessin dans lequel :

La figure 1 est une vue schématique à plat de la plaquette et de son support.

La figure 2 est une vue de profil de la figure 1.

Les figures 3 et 3a représentent un détail de l'articulation (A) de la plaquette sur son support.

Les figures 4, 5, 6, 6a représentent différentes formes d'articulation (A).

La figure 7 est une variante de la figure 1.

La figure 8 est une vue de profil de la figure 7.

La figure 9 est un détail de la partie coulissante (B) de la plaquette sur son support.

La figure 10 est une coupe de la figure 9 selon X-X.

La figure 11 est une vue d'ensemble d'une monture de lunettes munies de plaquettes selon l'invention.

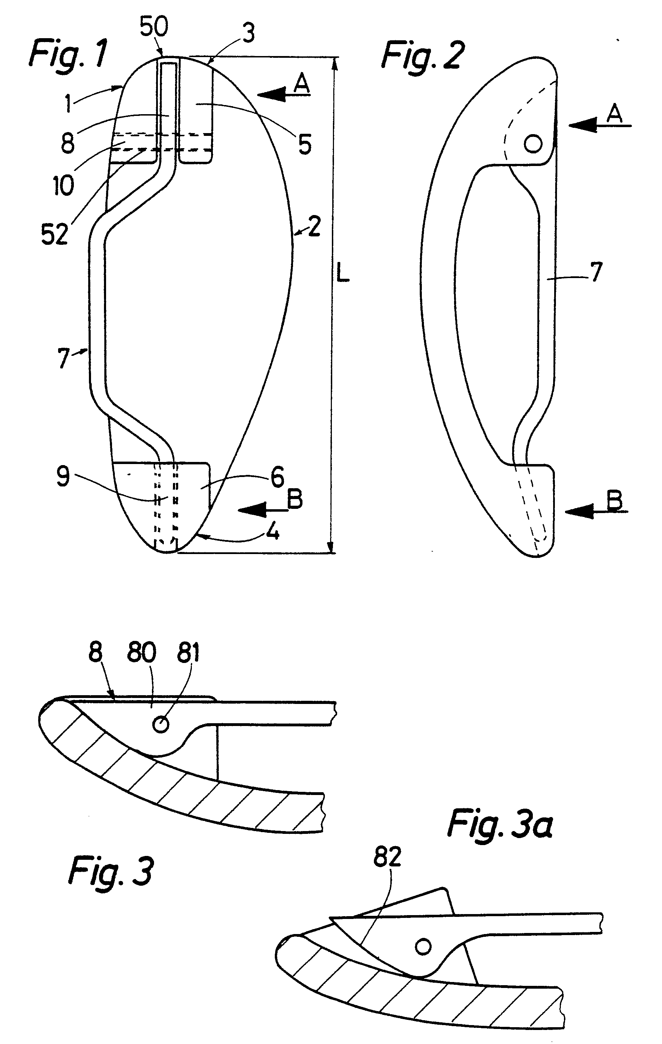

La plaquette nasale 1 pour monture de lunettes représentée par les figures 1 et 2 est constituée d'un corps 2 en matière plastique souple pourvu à chacune de ses extrémités 3, 4, déterminées par sa plus grande longueur L, de parties en relief 5, 6 alignées sur la face orientée vers le cercle à drageoir de la monture de lunettes.

La partie en relief 5 constitue l'un des éléments des moyens d'articulation A, l'autre élément étant une des extrémités 8 du support de plaquette 7 relié au cercle à drageoir par soudure ou collage, le pivot 10 de l'articulation pouvant être réalisé de diverses manières.

Une forme de réalisation des moyens d'articulation est représentée par les figures 1, 2, 3 et 3a.

La partie en relief 5 comporte une fente 50, orientée dans le sens de la plus grande longueur L de la plaquette, sensiblement normale au corps 2 ; un conduit 52 traverse de part en part la partie 5 perpendiculairement à la fente. L'extrémité 8 du support est aplatie en un méplat 80, de façon que l'épaisseur dudit méplat corresponde à la largeur de la fente 50 ; il comporte un trou 81 dont la position coïncide avec le conduit 52 traversé par le pivot 10.

Les figures 3 et 3a représentent deux positions de l'articulation A : une position d'appui (fig. 3) de la plaquette contre une partie du méplat 80 formant une butée 82, une position de retrait (fig. 3a) lorsque la plaquette est déformée par le poids de la monture de lunettes reposant sur le nez de l'utilisateur.

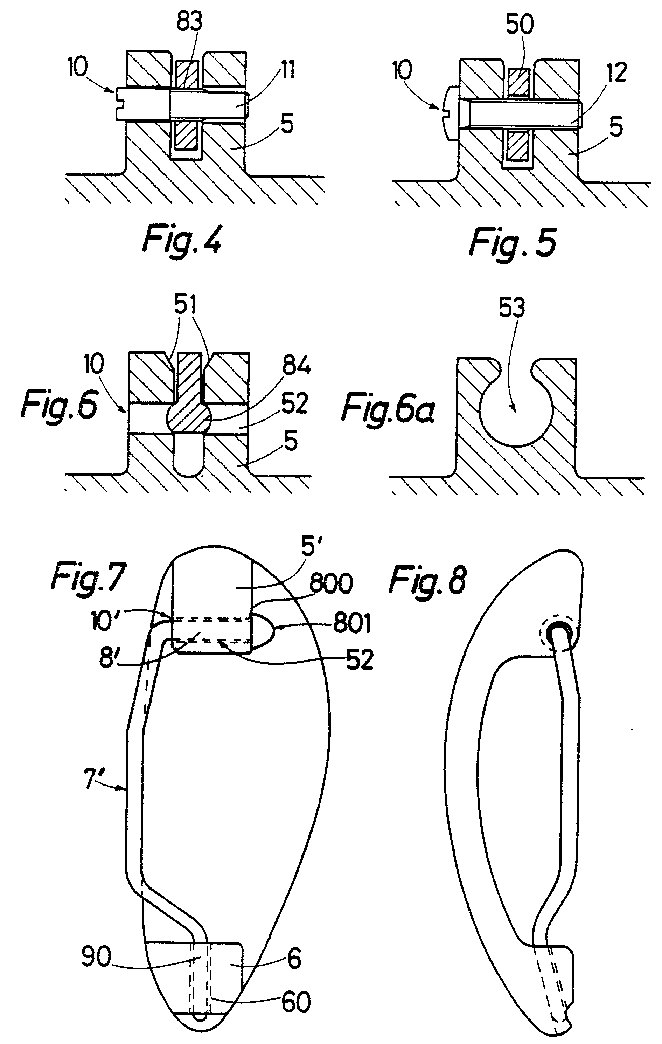

La figure 4 représente une forme de réalisation de l'articulation (A) dans laquelle le trou 81 du méplat 80 est taraudé 83 et le pivot 10 est une vis 11 filetée au pas du taraudage 83.

La figure 5 représente une autre forme de réalisation de l'articulation (A) dans laquelle le pivot 10 est une vis 12 auto-taraudante mise en place dans le conduit 52 à travers le trou 81.

La figure 6 représente une autre forme de réalisation de l'articulation (A) dans laquelle les lèvres 51 de la fente 50 de la partie en relief 5 sont chanfreinées, l'extrémité 8 du support 7 comporte une rotule 84 encliquetée par pression manuelle dans la fente 50, au niveau de son croisement avec le conduit 52.

La figure 6a représente une autre forme de réalisation de l'articulation A dans laquelle la partie en relief 5 de la plaquette contient une cuvette 53 et l'extrémité 8 du support 7 comporte une rotule 84 assurant la fonction du pivot 10. La plaquette peut, dans ce cas, prendre plusieurs orientations par rapport à son support 7.

Les figures 7 et 8 représentent une autre forme de réalisation de l'articulation A, dans laquelle l'extrémité 8' du support 7' est cylindrique, coudée de façon qu'elle constitue le pivot 10' de l'articulation A en traversant la partie en relief 5 à travers le conduit 52. Cette extrémité 8' du support 7' est terminée par un épaulement 800 surmonté d'une calotte 801 ; le diamètre de l'épaulement 800 est légèrement supérieur à celui du pivot 10' et à celui du conduit 52 de façon que ledit épaulement constitue un arrêt empêchant l'articulation de se disjoindre. Le support 7' est d'une seule pièce, la calotte 801 est obtenue par refoulement de l'extrémité 8'.

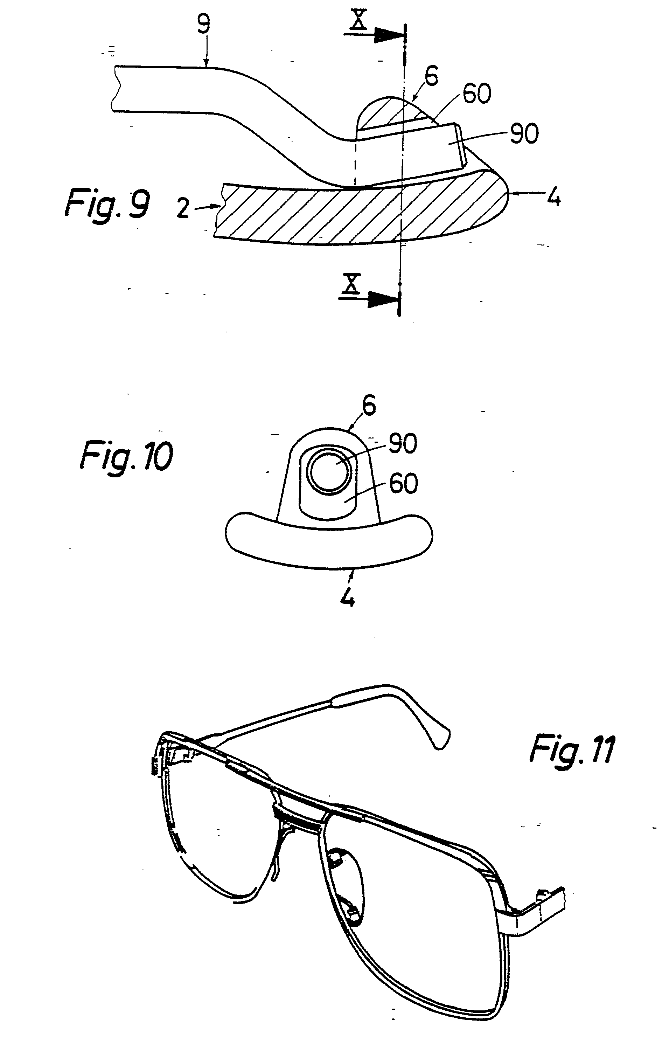

Une forme de réalisation des moyens de coulissement (B) de la plaquette 1 est représentée par la figure 9 et la coupe selon X-X de la figure 10 sur lesquelles l'autre extrémité 9 du support 7 est un coulisseau 90 glissant dans une coulisse 60 moulée dans la partie en relief 6 de l'extrémité 4 du corps 2 de la plaquette 1.

La plaquette 1 est mise en place sur son support 7 en introduisant d'abord le coulisseau 90 dans la coulisse 60 puis en fixant le pivot 10 de l'articulation dans le trou 81 ou bien en enfonçant la rotule 84 dans la fente 50 de la partie en relief 5 du corps 2 ou dans la cuvette 53.

La longueur L du corps 2 est calculée de façon que la plaquette, même complètement aplatie, ne puisse s'échapper du support 7. La flexibilité de la plaquette est utilisée pleinement pour le plus grand confort du porteur de lunettes, puisque le coulisseau 90 glisse dans la coulisse 60 sans pouvoir s'en échapper y étant maintenu par le pivot 10 de l'articulation ou par la rotule 84.

Dans le cas de la forme de réalisation représentée par les figures 7, 8 et 11, le coulisseau 90 est introduit en premier lieu dans la coulisse 60 puis l'extrémité 8' du support 7' est enfoncée dans le conduit où il assurera la fonction de pivot 10' de l'articulation A. L'épaulement 800 l'empêchera de s'échapper du conduit 52.

## Revendications

1. Plaquette nasale (1) en matière plastique souple pour monture de lunettes, qui est reliée au cercle à drageoir de ladite monture par un support (7) fixé ponctuellement sur ledit cercle et dont la face orientée vers le cercle à drageoir comporte, alignés dans le sens de sa plus grande longueur (L), à l'une et l'autre de ses extrémités (3, 4), des moyens de liaison (A, B) de la plaquette (1) avec le support (7), caractérisée par le fait que les moyens de liaison situés à l'une desdites extrémités (3) sont constitués par des moyens d'articulation (A) de la plaquette sur son support, agencés de façon à définir un point d'appui fixe pour ladite plaquette (1), cependant que les moyens de liaison situés à l'autre desdites extrémités (4) sont constitués par des moyens de coulissement (B) de la plaquette sur ledit support, agencés de façon à définir un point d'appui mobile pour ladite plaquette (1), lesdits moyens d'articulation (A) coopérant avec lesdits moyens de coulissement (B) afin de faciliter la mise en place et le maintien de la plaquette sur le support ainsi que son orientation et sa flexibilité entre ces deux seuls points d'appui (A, B).

2. Plaquette nasale selon la revendication 1, caractérisée par le fait que les moyens d'articulation (A) sont constitués, d'une part, d'une partie en relief (5) située à l'une des extrémités (3) du corps (2) de la plaquette, d'autre part, d'une des extrémités (8) du support (7), ladite partie en relief (5) et l'extrémité du support étant reliées par le pivot (10) de l'articulation.

3. Plaquette nasale selon la revendication 2, caractérisée par le fait que la partie en relief (5) comporte une fente (50) orientée dans le sens de la longueur (L) et qu'elle est traversée perpendiculairement à cette fente par un conduit (52) contenant le pivot (10).

4. Plaquette nasale selon la revendication 3, caractérisée par le fait que l'extrémité (8) du support (7) comporte un méplat (80) percé d'un trou (81) taraudé par lequel passe une vis (11) filetée au pas du trou et constituant le pivot (10) à travers le conduit (52).

5. Plaquette nasale selon la revendication 4, caractérisée par le fait que le pivot (10) est une vis autotaraudante.

6. Plaquette nasale selon la revendication 2, caractérisée par le fait que la partie en relief (5) de la plaquette contient une cuvette (53) et que l'extrémité (8) du support comporte une rotule (84) assurant la fonction du pivot (10).

7. Plaquette nasale selon la revendication 2, caractérisée par le fait que l'extrémité (8') du support (7') est cylindrique, coudée de façon qu'elle constitue le pivot (10') de l'articulation (A) en traversant la partie en relief (5) à travers le conduit (52), qu'elle est pourvue d'un épaulement (800) surmonté d'une calotte (801), le diamètre de l'épaulement étant légèrement supérieur à celui du pivot (10') et à celui du conduit (52) de façon que ledit épaulement constitue un arrêt empêchant l'articulation de se disjoindre.

8. Plaquette nasale selon la revendication 1, caractérisée par le fait que les moyens de coulissement (B) coopérant avec les moyens d'articulation (A) sont constitués, d'une part, d'une partie en relief (6) située à l'autre extrémité (4) du corps (2) de la plaquette, comportant une coulisse (60) orientée dans le sens de la longueur (L), d'autre part, de l'autre extrémité (9) du support (7) comportant un coulisseau (90) de forme correspondant à celle de la coulisse, de façon que la plaquette puisse se déformer entre l'articulation (A), point d'appui fixe, et le coulissement (B), point d'appui mobile.

## Claims

1. A nose pad (1) of flexible plastic material for a spectacle frame, connected to the bezel rim of said frame by a support member (7) fastened in a punctiform manner to said rim, wherein the nose pad face directed towards the bezel rim comprises at the one and the other of its ends (3, 4), aligned in the direction of its largest length (L), means (A, B) for connecting the pad (1) to said support member (7), characterized by the fact that said connecting means disposed at one of said ends (3) consist of means (A) for pivotally mounting the pad to its support member in such a manner that a fixed supporting point for said pad (1) is defined, whereas the connecting means disposed at the other of said ends (4) consist of means (B) for slidingly mounting the pad to said support member in such a manner that a movable supporting point for said pad (1) is defined, whereby said pivot means (A) are cooperating with said sliding means (B) so as to facilitate the positioning and holding in position of the pad on said support member as well as its orientation and its flexibility between said two supporting points (A, B).

2. The nose pad of claim 1, characterized by the fact that said pivot means (A) comprise on the one hand a projection (5) disposed at one end (3) of the nose-pad body (2), and on the other hand one end (8) of said support member (7), said projection (5) and the end (8) of the support member being interconnected by the pivot (10) of said pivot means.

3. The nose pad of claim 2, characterized by the fact that said projection (5) comprises a slot (50) directed in the longitudinal direction (L) and a hole (52) engaged by said pivot (10) and traversing said projection perpendicular to said slot.

4. The nose pad of claim 3, characterized by the fact that said one end (8) of said support member (7) comprises a flat portion (80) through which a tapped hole (81) is formed for engagement by a screw (11) of corresponding pitch which constitutes the pivot (10) through said hole (52).

5. The nose pad of claim 4, characterized by the fact that said pivot (10) consists of a self-tapping screw.

6. The nose pad of claim 2, characterized by the fact that said projection (5) of the nose pad comprises a socket-forming portion (53) and that said one end (8) of support member (7) comprises a ball-shaped portion (84) having the function of the pivot (10).

7. The nose pad of claim 2, characterized by the fact that said one end (8') of support member (7) is cylindrical and bent to constitute the pivot (10') of said pivot means (A) by traversing the projection (5) in the hole (52), said one end (8') further comprising a shoulder (800) formed with an external semi-spherical head (801), the diameter of said shoulder being slightly greater than those of said pivot (10') and hole (52), so that said shoulder acts as a stop preventing the disassembling of said pivot means.

8. The nose pad of claim 1 characterized by the fact that said sliding means (B) cooperating with said pivot means (A) comprise on the one hand a projection (6) formed at the other end (4) of the nose-pad body (2) and incorporating a slideway (60) extending in the longitudinal direction (L), and on the other hand, at the other end (9), said support member (7) comprising a slider (90) corresponding in shape to said slideway, in such a manner that the nose pad may undergo an distortion between said pivot means (A) constituting the fixed supporting point, and said sliding means (B) constituting the movable supporting point.

## Patentansprüche

1. Padsteg (1) aus flexiblem Material für ein Brillengestell, welcher mit dem Augenrand dieses Gestells durch einen punktförmig an diesem befestigten Träger (7) verbunden ist und dessen dem Augenrand zugewandte Fläche an ihren beiden Enden (3, 4) in Richtung ihrer grössten Länge (L) ausgerichtete Verbindungsmittel (A, B) zur Verbindung des Padstegs (1) mit dem Träger (7) aufweist, dadurch gekennzeichnet, dass die Verbindungsmittel am einen der erwähnten Enden (3) aus einer den Padsteg schwenkbar an seinem Träger befestigenden Gelenkverbindung (A) derart bestehen, dass ein fester Stützpunkt für den Padsteg (1) definiert wird, während die Verbindungsmittel am anderen der erwähnten Enden (4) aus einer den Padsteg verschiebbar auf dem erwähnten Träger haltenden Gleitführung (B) derart bestehen, dass ein beweglicher Stützpunkt für den erwähnten Padsteg (1) gebildet wird, wobei die erwähnte Gelenkverbindung (A) mit der erwähnten Gleitführung (B) zusammenwirkt, um die Positionierung und das Halten des Padstegs auf dem Träger sowie seine Orientierung und seine Flexibilität zwischen diesen beiden Stützpunkten (A, B) zu erleichtern.

2. Padsteg nach Anspruch 1, dadurch gekennzeichnet, dass die Gelenkverbindung (A) einerseits aus einem Vorsprung (5) an einem der Enden (3) des Padstegkörpers (2) und andererseits aus einem der Enden (8) des Trägers (7) besteht, wobei der Vorsprung (5) und das Ende des Trägers durch den Drehzapfen (10) des Gelenks verbunden sind.

3. Padsteg nach Anspruch 2, dadurch gekennzeichnet, dass der Vorsprung (5) einen in Richtung der Länge (L) orientierten Spalt (50) aufweist und senkrecht zu diesem Spalt von einer Oeffnung (52) durchsetzt wird, in welcher der Drehzapfen (10) angeordnet ist.

4. Padsteg nach Anspruch 3, dadurch gekennzeichnet, dass das Ende (8) des Trägers (7) einen von einer Gewindeöffnung (81) durchsetzten, flachen Teil (80) aufweist und in dieser Gewindeöffnung eine Schraube (11) eingesetzt ist, deren Ganghöhe der der Gewindeöffnung entspricht und welche den die erwähnte Oeffnung (52) durchsetzenden Drehzapfen (10) bildet.

5. Padsteg nach Anspruch 4, dadurch gekennzeichnet, dass der Drehzapfen (10) eine selbstschneidende Schraube ist.

6. Padsteg nach Anspruch 2, dadurch gekennzeichnet, dass der erwähnte Vorsprung (5) des Padstegs mit einer Gelenkpfanne (53) versehen ist und das Ende (8) des Trägers eine Gelenkkugel (84) aufweist, welche die Funktion des Drehzapfens (10) hat.

7. Padsteg nach Anspruch 2, dadurch gekennzeichnet, dass das Ende (8') des Trägers (7') zylindrisch und derart gebogen ist, dass es den Gelenkzapfen (10') der Gelenkverbindung (A) bildet, indem es den Vorsprung (5) in der erwähnten Oeffnung (52) durchsetzt, und dass das erwähnte Ende (8') eine Schulter (800) mit einem angeformten kalottenartigen Vorsprung (801) aufweist, wobei der Durchmesser der Schulter etwas grösser als der des Drehzapfens (10') und der der Oeffnung (52) ist, derart, dass die erwähnte Schulter einen Anschlag bildet, welcher ein Lösen der Gelenkteile verhindert.

8. Padsteg nach Anspruch 1, dadurch gekennzeichnet, dass die mit der Gelenkverbindung (A) zusammenwirkende Gleitverbindung (B) einerseits aus einem Vorsprung (6), der am anderen Ende (4) des Padstegkörpers (2) angeordnet und mit einer in Richtung der Länge (L) orientierten Führungsöffnung (60) versehen ist, und andererseits aus dem anderen Ende (9) des Trägers (7) besteht, welches einen Schieber (90) bildet, dessen Form der der Führungsöffnung entspricht, derart, dass der Padsteg sich zwischen der den festen Stützpunkt bildenden Gelenkverbindung (A) und der den beweglichen Stützpunkt bildenden Gleitführung (B) verformen kann.

*Fig. 1*

*Fig. 2*

*Fig. 3*

*Fig. 3a*

Fig.4

Fig.5

Fig.6

Fig.6a

Fig.7

Fig.8

**Fig. 9**

**Fig. 10**

**Fig. 11**